**Europäisches Patentamt**

**European Patent Office**

**Office européen des brevets**

(11) Veröffentlichungsnummer: **0 161 474**
A1

# (12) EUROPÄISCHE PATENTANMELDUNG

(21) Anmeldenummer: 85104216.8

(22) Anmeldetag: 06.04.85

(51) Int. Cl.⁴: **G 05 D 13/62**

(30) Priorität: 12.05.84 DE 3417688

(43) Veröffentlichungstag der Anmeldung: 21.11.85
Patentblatt 85/47

(84) Benannte Vertragsstaaten: **AT CH DE GB LI**

(71) Anmelder: **Mergenthaler Linotype GmbH, Frankfurter Allee 55-75, D-6236 Eschborn (DE)**

(72) Erfinder: **Reiniger, Jürgen, Am Hang 1F, D-6368 Bad Vilbel (DE)**

(74) Vertreter: **Schubert, Siegmar, Dipl.-Ing. et al, Patentanwälte Dr. V. Schmied-Kowarzik Dr. P. Weinhold Dr.-Ing. G. Dannenberg Dr. D. Gudel Dipl.-Ing. S. Schubert Dr. P. Barz Grosse Eschenheimer Strasse 39, D-6000 Frankfurt am Main 1 (DE)**

(54) **Verfahren und Einrichtung zur Gleichlaufregelung eines Elektromotors, insbesondere zum Antrieb eines drehbaren reflektierenden Elements eines optischen Abtastsystems.**

(57) In einer Einrichtung zur Gleichlaufregelung eines Elektromotors insbesondere zum Antrieb eines drehbaren reflektierenden Elements (2) eines optischen Abtastsystems ist eine digitale Regelungsanordnung vorgesehen. Sie umfaßt einen einen Istwertpuls erzeugenden Tachogenerator (3), einen digitalen Sollwertgeber und einen digitalen Vergleicher (in dem Digitalregler 6). Ein Umsetzer (10) setzt die in dem Digitalregler gebildete Regelabweichungsgröße in eine den Motor beaufschlagende Stellgröße um. Um systematische Tachofehler in ihren störenden Auswirkungen auf die Gleichlaufregelung zu beseitigen, ist an einen Ausgang des Vergleichers (Digitalregler 6) ein Phasenmesser (12) zur Messung der diskreten Phasenwerte der während einer Umdrehung gebildeten digitalen Ausgangsgröße (Regelabweichungsgröße) sowie ein Mittelwertbilder des Phasenmittelwerts während einer Umdrehung angeschlossen. Ein Differenzbilder (16) steht mit den Ausgängen des Phasenmessers und des Mittelwertbilders in Verbindung. Der Differenzbilder (16) ist ausgangsseitig zu Eingängen eines Korrekturspeichers (18) für diskrete Phasendifferenzzahlen einer Umdrehung geführt. Die Ausgänge des Korrekturspeichers sind an Teilersteuereingänge eines mit einem konstanten Taktpuls gespeisten variablen Frequenzteilers (19) angeschlossen. Der variable Frequenzteiler speist eine Sollwertfrequenz in den Sollwerteingang (7) ein, deren Phasenlage entsprechend dem erfaßten systematischen Tachofehler korrigiert ist.

Verfahren und Einrichtung zur Gleichlaufregelung eines
Elektromotors, insbesondere zum Antrieb eines drehbaren
reflektierenden Elements eines optischen Abtastsystems

Die Erfindung betrifft ein Verfahren zur Gleichlaufregelung
eines Elektromotors insbesondere zum Antrieb eines drehbaren
reflektierenden Elements eines optischen Abtastsystems nach
dem Oberbegriff des Anspruchs 1.

Ein damit zusammenhängender Aspekt der Erfindung betrifft
eine Einrichtung zur Gleichlaufregelung eines Elektromotors
insbesondere zum Antrieb eines drehbaren reflektierenden
Elements eines optischen Abtastsystems nach dem Oberbegriff
des Anspruchs 7.

Optische Abtastsysteme sollen generell ein Strahlenbündel
proportional zu einem Abtastwinkel innerhalb einer erforderlichen Abtastlänge in einer Abtastebene positionieren. Bei
solchen passiven Abtastsystemen wird die Abtastebene in der
Weise abgetastet, daß Helligkeitsunterschiede von Strukturen
oder Zeichen in der Abtastebene erkannt und in entsprechende
elektrische Signale umgewandelt werden können. Bei aktiven
Abtastsystemen werden durch das Strahlenbündel in der Abtastebene nacheinander Bildpunkte projiziert. Insbesondere interessieren im Zusammenhang mit der vorliegenden Erfindung
aktive optische Abtastsysteme, mit denen Bildpunkte typografischer Schriftzeichen in der Bildebene entlang einer Abtastzeile projiziert werden. Hierzu wird das Strahlenbündel
entsprechend der Form der abzubildenden typografischen
Schriftzeichen helligkeitsmoduliert. Die Abtastzeilen, in
denen jeweils eine Reihe von Bildpunkten projiziert sind,
werden durch optische und/oder mechanische Mittel rechtwinklig zu der Abtastzeilenrichtung aneinandergesetzt, so
daß Zeilen von Schriftzeichen entstehen.

C161474

Zur Auswertung der mit einem passiven Abtastsystem erfaßten Bildpunktsignale bzw. zur Steuerung der Modulation in aktiven Abtastsystemen muß die Abtastposition des Strahlenbündels, die durch die Drehstellung des drehbaren reflektierenden Elements bestimmt ist, jeweils bekannt sein. Mit verhältnismäßig geringem Aufwand lassen sich diese Abtastpositionen ermitteln, wenn die Zeit gemessen bzw. ausgezählt wird, die vergangen ist, nachdem das Strahlenbündel eine Zeilenanfangsposition überfahren hat, bei der ein Zeilenanfangssignal gebildet wird. Das Zeilenanfangssignal kann beispielsweise durch eine Fotodiode mit Verstärker erzeugt werden, die neben der nutzbaren Abtastzeile angeordnet ist und am Abtastzeilenanfang von dem Strahlenbündel erreicht wird. Die jeweiligen Abtastpositionen können jedoch nur dann in dieser Weise abgeleitet werden, wenn das reflektierende Element mit konstanter Drehgeschwindigkeit bzw. Winkelgeschwindigkeit ausgelenkt wird. Es kommt darauf an, den Gleichlauf des Antriebs für das drehbare reflektierende Element,insbesondere einen Polygonspiegel, so zu steuern, daß während jedes einzelnen Umlaufs eine konstante gewünschte Drehgeschwindigkeit genau eingehalten wird.

In diesem Zusammenhang kommt es darauf an, die Drehgeschwindigkeit des Antriebs und des drehbaren reflektierenden Elements innerhalb jedes Umlaufs exakt zu messen, um daraus ein Regelabweichungs-Signal zu bilden, mit dem Schwankungen der Drehgeschwindigkeit durch Eingriff in den Antrieb ausgeglichen werden können. Zur Gleichlaufregelung kann das eingangs genannte digitale Verfahren und eine entsprechende Einrichtung als zum Stand der Technik gehörend vorausgesetzt werden. Diese digitalen Verfahren können sich generell gegenüber analogen Gleichlaufregelungsverfahren durch höhere Genauigkeit auszeichnen. Es hat sich herausgestellt, daß

0161474

ein die Genauigkeit der Gleichlaufregelung während jeweils einer Umdrehung limitierender Einfluß von einem Tachogenerator herrührt, mit dem die Drehgeschwindigkeit bzw. Drehzahl des Antriebs und des drehbaren reflektierenden Elements gemessen wird, indem dieser Tachogenerator einen elektrischen Puls abgibt, dessen Frequenz und Phasenlage ein Maß für die Drehgeschwindigkeit ist. Dieser Puls wird daher im folgenden als Istwertpuls bezeichnet. Die Phasen der diskreten Impulse des Istwertpulses, die während einer Umdrehung auftreten, weisen Fehler auf, und zwar systematische sich während jeder Umdrehung wiederholende Tachofehler z.B. durch Exzentrizität des Tachogenerators sowie zufällige Fehler, die wegen ihrer hohen Änderungsrate als "Jitter" bezeichnet werden können.

Der vorliegenden Erfindung liegt daher die Aufgabe zugrunde, die Genauigkeit der Gleichlaufregelung eines Elektromotors während jeder Umdrehung dadurch zu verbessern, daß die störenden Einflüsse der genannten Tachofehler auf die Regelung herabgesetzt werden.

Diese Aufgabe wird für ein Verfahren der eingangs genannten Gattung durch die in dem kennzeichnenden Teil des Anspruchs 1 angegebenen Verfahrensschritte gelöst.

Nach Anspruch 1 wird insbesondere der systematische Tachofehler erfaßt, indem die Phasen der Impulse des Istwertpulses während einer Umdrehung mit dem über diese Umdrehung gebildeten Phasenmittelwert einzeln verglichen werden. Die einzelnen oder diskreten Phasendifferenzen für die Impulse während dieser Umdrehung werden gespeichert und zur entsprechenden Beeinflussung zugeordneter Impulse eines Sollwertpulses herangezogen, die während der folgenden Umdrehung gebildet werden. Unter entsprechender Beeinflussung wird

0161474

hier eine solche verstanden, die bei der Differenzbildung zwischen Istwertpuls und Sollwertpuls in dem Regelkreis die Auswirkungen der systematischen Phasenschwankungen des Istwertpulses auf die Regelabweichung bzw. die daraus gebildete Stellgröße verschwinden läßt. Dies ist insbesondere dann der Fall, wenn die Phasenschwankungen der Impulse des Istwertpulses in aufeinanderfolgenden Umdrehungen jeweils die gleichen sind, d.h. wenn nicht zusätzliche größere zufällige Fehler auftreten.

Der besondere Vorteil dieses Verfahrens besteht darin, daß der systematische Fehler der Phasendifferenzen des Istwertpulses selbsttätig erfaßt wird und den Sollwertpuls selbsttätig korrigieren kann und dies nicht nur einmal bei einem besonderen Justierungsvorgang, sondern fortlaufend während des Betriebs des Antriebs und nach jedem erneuten Einschalten.

Somit lassen sich mit verhältnismäßig geringem Aufwand die die Gleichlaufregelung während jedes Umlaufs störenden systematischen Tachofehler in ihren störenden Auswirkungen auf die Regelung weitgehend beseitigen. Der Tachogenerator gibt damit auch bei nennenswerten Exzentrizitätsfehlern die Bewegung des Antriebs und des reflektierenden Elements weitgehend genau wieder.

Damit eignet sich das Verfahren besonders zur Gleichlaufregelung von Antrieben eines Polygonspiegels, der ein moduliertes Laserstrahlenbündel in einem typografischen Setzgerät ablenkt, denn im typografischen Satz bzw. im Druck können schon verhältnismäßig geringe Abweichungen von der idealen Schriftzeichenform und Anordnung stören, d.h. ästhetisch unbefriedigend in Erscheinung treten.

- 5 -

Durch die Gestaltung des Verfahrens nach Anspruch 2 wird auch der störende Einfluß der zufälligen Fehler auf die Gleichlaufregelung während einer Umdrehung beseitigt. Durch das iterative Erfassen der Phasendifferenzen für eine Reihe aufeinanderfolgender Umdrehungen erfolgt praktisch eine Mittelwertbildung für jeden einzelnen Impuls des Istwertpulses bzw. für jeden Tachoimpuls getrennt. Während eines beliebigen Umlaufs, in dem die Phasendifferenzen zwischen dem Mittelwert der Phase während der Umdrehung und den Phasen der diskreten Impulse des Istwertpulses gebildet werden, läßt sich nicht bestimmen, wie weit die Phasendifferenzen auf systematische oder zufällige Fehler zurückgehen. Durch Vergleich der Phasendifferenz eines bestimmten Impulses während der betrachteten Umdrehung mit der Phasendifferenz während einer oder mehrerer folgender Umdrehungen erfolgt die iterative Korrektur der gespeicherten diskreten Phasendifferenzen bis zum Erreichen eines vorgegebenen Wertes, d.h. eines Abbruchkriteriums der Phasendifferenzbildung. Der vorgegebene Wert kann beispielsweise $\pm$ 1 Bit sein. Damit kann dann der systematische Tachofehler für die folgenden Umdrehungen des Antriebs gespeichert bleiben. Der voranstehend erwähnte Vergleich der Phasendifferenz einer Umdrehung mit der Phasendifferenz während der nächsten erfolgt mit geringem Aufwand dadurch, daß die Phasenlage der entsprechenden Impulse des Sollwertpulses, wie zu Anspruch 1 erläutert, gleichsinnig wie die Phasendifferenzen der Impulse des Istwertpulses verändert werden sollen. Dies bedeutet, daß bei der nachfolgenden Umdrehung die Phasendifferenz zwischen zugeordneten Impulsen des Istwertpulses und des Sollwertpulses jeweils maßgeblich auf den zufälligen Fehler zurückgeht und deswegen zur iterativen Korrektur der gespeicherten Phasendifferenzen der Impulse des Istwertpulses herangezogen werden kann.

- 6 -

Mit Anspruch 3 ist angegeben, daß zweckmäßig die Phasendifferenzen zwischen den einzelnen Impulsen des Istwertpulses und dem Mittelwert der Phasen während einer Umdrehung erst dann gebildet werden, wenn die Motordrehzahl einen annähernd gleichbleibenden Wert erreicht hat, damit die Mittelwerte der Phasen während aufeinanderfolgender Umdrehungen nicht schwanken.

Mit Anspruch 4 ist eine besonders zweckmäßige Phasensteuerung des Sollwertpulses entsprechend den gespeicherten Phasendifferenzen angegeben. Der hierzu verwendete konstante Taktpuls kann im Falle eines aktiven Abtastsystems weiter zweckmäßig gleich dem Videopuls sein. Der vorgesehene variable Frequenzteiler, der mit dem konstanten Taktpuls gespeist wird, dient also zur Phasensteuerung des untersetzten Sollwertpulses.

Die nach Anspruch 7 vorgesehene Einrichtung zur Gleichlaufregelung eines Elektromotors dient zur Ausübung des Verfahrens nach Anspruch 1 und gleichzeitig zur Ausübung des Verfahrens nach Anspruch 2, so daß mit dieser Einrichtung die die Genauigkeit der Gleichlaufregelung während jeder Umdrehung herabsetzenden Einflüsse des systematischen Tachofehlers und der zufälligen Fehler eliminiert werden. Dies erfolgt mit geringem Aufwand, auch deswegen, weil der digitale Vergleicher bzw. digitale Regler für jeden Istwertpuls einen Ausgangspuls abgeben kann, der ein Maß für die Phasenlage des Istwertpulses zu dem zugehörigen Sollwertpuls ist. Dieser Ausgangspuls kann also zur Phasenmessung der einzelnen Impulse des Istwertpulses herangezogen werden. Der in dem Anspruch 7 genannte Korrekturspeicher, in den diskrete Phasendifferenzzahlen einspeicherbar sind, wird nicht während aufeinanderfolgender Umdrehungen gelöscht, wenn neue Phasendifferenzzahlen gebildet werden, sondern entsprechend den neuen Phasendifferenzzahlen im Sinne einer iterativen Korrektur der zuvor gespeicherten Phasendifferenzzahlen gesteuert. Dies kann beispielsweise bedeuten, daß gespeicherte Phasendifferenzzahlen unverändert bleiben, wenn während einer folgenden Umdrehung die neuen Differenzzahlen null sind, oder wenn die folgenden Phasendifferenzzahlen einen bestimmten Betrag haben, je nach Vorzeichen entsprechend diesem Betrag erhöht oder vermindert werden.

Zweckmäßig ist der Phasenmesser nach Anspruch 6 mit einem Speicher zur Speicherung der während einer Umdrehung gemessenen diskreten Phasenwerte ausgebildet, da aus diesen diskreten Phasenwerten zunächst der Mittelwert zu bilden ist, mit dem anschließend die diskreten Phasenwerte zur Bildung der Phasendifferenzzahlen verglichen werden. Der digitale Vergleicher, in dem der Istwertpuls mit dem Sollwertpuls verglichen wird, ist nach Anspruch 9 vorteilhaft Bestandteil eines Digitalreglers in PLL-Technologie.

Die Gleichlaufregeleinrichtung kann nach Anspruch 10 zweckmäßig zum vollständigen Regelkreis erweitert werden, indem der Digitalregler zur Bildung eines entsprechend der Regelabweichung längenmodulierten Pulses ausgebildet ist, aus dem über ein Filter und einen Spannungs/Stromumsetzer ein den Elektromotor des Antriebs speisender geregelter Strom als Stellgröße erzeugt wird.

Insgesamt zeichnet sich die Gleichlaufregelung mit den erfindungsgemäßen Merkmalen durch hohe Genauigkeit und Stabilität aus.

Ein Ausführungsbeispiel der erfindungsgemäßen Einrichtung wird anhand einer Zeichnung mit drei Figuren im folgenden erläutert. Es zeigen:

Fig. 1  ein schematisiertes Blockschaltbild der Einrichtung zur Gleichlaufregelung eines Elektromotors zum Antrieb eines Spiegelpolygons in einer Fotosetzmaschine,

Fig. 2  Impulsdiagramme, die nach dem erfindungsgemäßen Verfahren auftreten können, das insbesondere mit der Einrichtung nach Figur 1 ausgeübt wird.

Fig. 3 das optische System (Optik), zu dem das Spiegelpolygon gehört, sowie einen Teil der Einrichtung zur Gleichlaufregelung, der zur festen Einstellung der Zeilenlänge modifiziert ist.

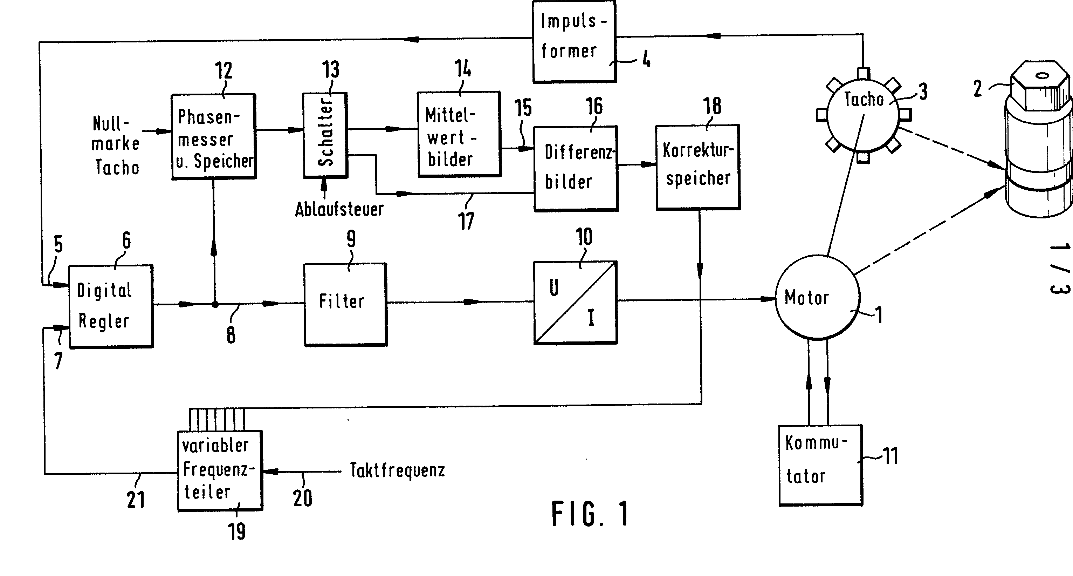

In Figur 1 ist mit 1 ein Motor zum Antrieb eines Polygonspiegels 2 bezeichnet. Die Drehzahl des Motors wird mit einem mit diesem gekuppelten Tachogenerator 3 erfaßt. Der Tachogenerator ist dazu eingerichtet, für jedes Winkelinkrement, welches der Motor zurücklegt, einen Impuls abzugeben und an einer vorbestimmten Stelle einen besonderen Impuls als Nullmarke. Der daraus gebildete und mit dem Impulsformer 4 gebildete Puls wird im folgenden als Istwertpuls bezeichnet. Der Istwertpuls wird in einen Eingang 5 eines Digitalreglers in PLL-Technologie 6 eingespeist, der einen digitalen Vergleicher umfaßt. Ein zweiter Eingang 7 des Digitalreglers dient zur Einspeisung eines Sollwertpulses.

Von einem Ausgang des Digitalreglers führt eine Leitung 8 über einen Filter 9 und einen Spannungs/Stromumsetzer 10 zu dem Motor 1, der durch einen elektronischen Kommutator 11 zur Erzeugung eines Drehfeldes kommutiert wird.

An die Leitung 8 ist weiter ein Phasenmesser 12 mit einem Speicher angeschlossen, der die gemessenen Phasen der Impulse des Istwertpulses für eine Umdrehung einzeln abspeichern kann. Über einen gesteuerten Schalter 13 kann der Ausgang des Phasenmessers mit Speicher wahlweise an einen Mittelwertbilder 14 oder einen ersten Eingang 15 eines Differenzbilders 16 angeschlossen werden. An einen zweiten Eingang 17 des Differenzbilders ist ein Ausgang des Mittelwertbilders angeschlossen. Ein Ausgang des Differenzbilders ist zu einem Eingang eines Korrekturspeichers 18 geführt, in dem Phasendifferenzen für jeden Impuls des Istwertpulses während einer Umdrehung des Motors 1 gespeichert werden können. Der Korrekturspeicher ist so organisiert, daß die eingespeicherten Werte bei der Einspeisung des jeweils nächsten Wertes für einen Speicherteil nicht gelöscht werden, sondern iterativ korrigiert werden. - Ausgangsseitig ist der Korrekturspeicher zu Steuereingängen eines variablen Frequenzteilers 19 geführt, der mit einem konstanten Taktimpuls, insbesondere einer Videofrequenz von 50 MHz, an einem Eingang 20 gespeist wird. Ein Ausgang 21 des variablen Frequenzteilers führt zu dem zweiten Eingang 7 für den Sollwertpuls des Digitalreglers 6.

Nach Einschalten des Motors 1 gibt der Tachogenerator 3 einen Istwertpuls ab, dessen Pulsfrequenz und Phasenlage der Motordrehzahl entspricht, die auch während jeder einzelnen Umdrehung konstant zu halten ist. Der Istwertpuls kann hinsichtlich der Phasenlage der einzelnen Impulse auch dann Schwankungen unterliegen, wenn der Motor mit konstanter Drehzahl dreht, da systematische Tachofehler während jeder Umdrehung periodisch auftreten. Diese Tachofehler können beispielsweise durch eine Exzentrizität der Tachowelle verursacht sein. Es geht darum, die Regelung auch während jeder Umdrehung so auszuführen, daß die Motordrehzahl während der Umdrehung konstant bleibt, damit ohne gesondertes Meßsystems in einer nicht dargestellten Bildebene, die mit dem Spiegelpolygon abgetastet wird, die abgetastete Bildposition genau ermittelt werden kann. Die Ermittlung erfolgt dabei auf einer Zeitbasis ab Überstreichen eines Gebers für ein Zeilenanfangssignal.

Es wird zunächst vorausgesetzt, daß der variable Frequenzteiler 19 nicht durch den Ausgang des Korrekturspeichers
18 variabel gesteuert ist, sondern einen Sollwertpuls mit
Impulsen konstanter Phasenlage gemäß Kurvenzug à in Figur
2 abgibt. Der Motor sei auf eine - über mehrere Umdrehungen
gesehen - annähernd konstante Drehzahl hochgelaufen, so daß
der Tachogenerator über den Impulsformer einen Istwertpuls
entsprechend dem Kurvenzug b abgibt. Der Sollwertpuls und
der Istwertpuls gehören zu einer ersten Umdrehung des Motors.

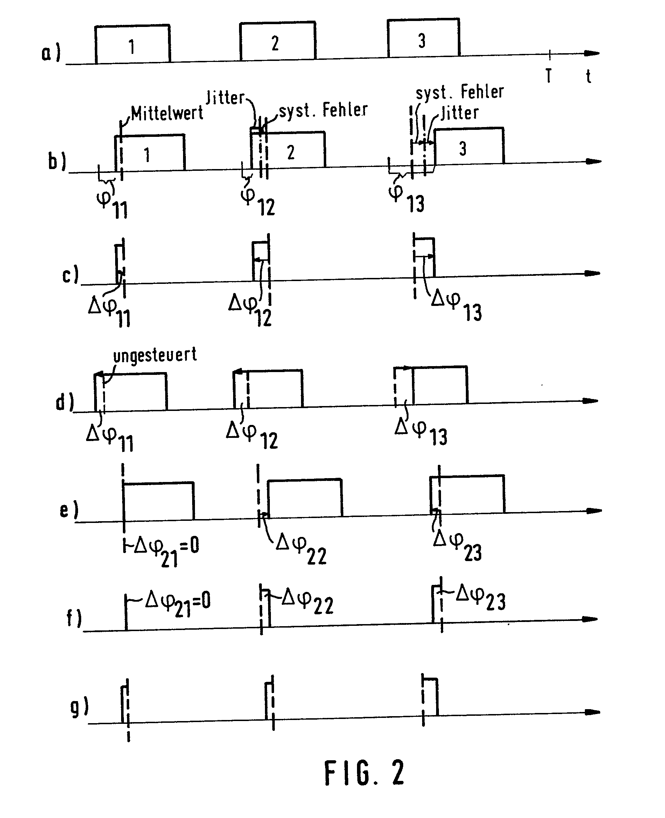

In Figur 2 ist zunächst sehr vereinfachend angenommen, daß
während einer Umdrehung der Periode T nur drei Impulse 1, 2,
3 auftreten.

In dem Digitalregler 6 wird in konventioneller Weise die
Phase zwischen einer Vorderflanke jedes Impulses des Istwertpulses - Impulsdiagramm b bzw. e - bezüglich der Vorderflanke des zugehörigen Impulses des Sollwertpulses - Impulsdiagramm a bzw. d - gebildet. An dem Ausgang des Digitalreglers auf der Leitung 8 erscheinen daher längenmodulierte Impulse entsprechend den Phasenwinkeln $\varphi_{11}$, $\varphi_{12}$,
$\varphi_{13}$ - Impulsdiagramm c - bzw. $\varphi_{21}$, $\varphi_{22}$, $\varphi_{23}$:
Impulsdiagramm f.

Diese längenmodulierten Spannungspulse werden im Filter 9
geglättet und in dem Spannungs/Stromumsetzer 10 in einen
entsprechenden Strom umgesetzt, der das Drehmoment und die
Drehzahl des Motors 1 bestimmt.

Außerdem wird die Ausgangsgröße des Digitalreglers, die
der Regelabweichungsgröße zwischen Istwertfrequenz und Sollwertfrequenz entspricht, in den Phasenmesser 13 mit Speicher
für eine Umdrehung eingespeist. Darin wird der Phasenwinkel
$\varphi_{11}$, $\varphi_{12}$, $\varphi_{13}$ für jeweils eine Umdrehung, hier die erste
Umdrehung, ermittelt und gespeichert.

Auf Grund der gespeicherten Phasenwinkel erfolgt in dem Mittelwertbilder 14 nach der ersten Umdrehung eine Mittelwertbildung, mit der der Mittelwert aller Phasen der Einzelimpulse und damit der Mittelwert der Umdrehungsgeschwindigkeit des Motors gebildet wird. Mit diesem Mittelwert werden in dem Differenzbilder 16 anschließend - hierzu ist der Schalter 13 umgeschaltet - die Phasenlagen der einzelnen Impulse des Istwertpulses verglichen. Dies ist in Fig. 2, Kurvenzug b, damit angedeutet, daß der Mittelwert durch eine unterbrochene Linie dargestellt ist, wobei sich die Differenz jeder einzelnen Phasenlage eines Impulses zu dem Mittelwert durch den Abstand zwischen der durchgezogen gezeichneten Impulsvorderflanke zu dem unterbrochenen Mittelwert ergibt. Diese Differenz ist in dem Kurvenzug c mit $\Delta\varphi_{11}$, $\Delta\varphi_{12}$, $\Delta\varphi_{13}$ dargestellt.

Aus den Kurvenzügen b und c ist ersichtlich, daß die Phasenlage der einzelnen Impulse des Istwertpulses während einer Umdrehung zu der Vorderflanke des Sollwertpulses unterschiedliche Abweichungen zeigen kann. Dies drückt sich in nach Betrag und Vorzeichen unterschiedlichen Differenzen der Phasen der einzelnen Impulse zu dem Mittelwert gemäß Kurvenzug c aus, da der Mittelwert während einer Umdrehung einen feststehenden Betrag bildet.

Die unterschiedlichen Beträge und Vorzeichen der einzelnen Phasendifferenzen gehen auf unterschiedliche Fehler des Tachogenerators zurück; denn bei fehlerfreier Messung wären die Phasenlagen der einzelnen Istwertpulse und auch die Differenz der Phasen zu dem Mittelwert für alle Impulse gleich. Die unterschiedlichen Fehler können in einen periodisch über eine Umdrehung auftretenden systematischen Fehler und in einen unsystematischen Fehler, auch Jitter genannt, untergliedert werden. Es geht darum, den

- 13 -

periodischen systematischen Fehler in seinen Auswirkungen auf die Gleichlaufregelung auszuschalten. Dafür wird angenommen, daß dieser systematische Fehler groß gegenüber den anderen Fehlern, insbesondere dem Jitter, ist. Aus der Phase jedes einzelnen Impulses des Istwertpulses gemäß Kurvenzug b kann zunächst nicht geschlossen werden, ob ein systematischer oder ein unsystematischer Fehler für die Abweichung dieser Phasenlage von dem Mittelwert verantwortlich ist. Es sei angenommen, daß zu dem Impuls 1 nur ein systematischer Fehler aufgetreten ist, der durch den Abstand der Impulsvorderflanke zu dem unterbrochenen Mittelwert markiert ist. Zu Impuls 2 ist sowohl ein systematischer Fehler, der durch den Abstand zwischen der unterbrochenen Linie und der strichpunktierten Linie markiert ist, sowie ein nicht systematischer Fehler, der durch den Abstand zwischen der strichpunktierten Linie zu der durchgezeichneten Vorderflanke gekennzeichnet ist, gegeben. Der Impuls 3 weist wiederum einen systematischen Fehler zwischen dem unterbrochen dargestellten Mittelwert zu der strichpunktierten Linie auf, jedoch im umgekehrten Sinne wie der Impuls 2. In der gleichen Richtung kommt zu dem Impuls 3 ein nicht systematischer Fehler zwischen der strichpunktierten Linie und der durchgezogen dargestellten Vorderflanke hinzu. - Unabhängig davon, ob die Differenzen der Phasen der einzelnen Impulse zu dem konstanten Mittelwert durch systematische oder unsystematische Fehler verursacht sind, werden diese Differenzen für die weitere Gleichlaufregelung in den Korrekturspeicher einzeln eingespeist. Sie sollen sich jedoch letztlich nur zur Beseitigung des systematischen Fehlers auf die Gleichlaufregelung auswirken, der größenmäßig überwiegt.

Hierzu wird für die Erzeugung des Sollwertpulses mit dem variablen Frequenzteiler die feste Taktfrequenz für jeden einzelnen Impuls so unterteilt, daß die Phasen der Vorder-

0161474

flanken der Impulse des Sollwertpulses für die nächste Umdrehung im gleichen Sinne und um den gleichen Betrag wie den gespeicherten Phasendifferenzen gesteuert werden. Dies ist in Kurvenzug d für die Sollwertpulse der nächsten Umdrehung angedeutet. Die nicht gesteuerten Vorderflanken der Impulse des Sollwertpulses sind dabei durch eine unterbrochene Linie markiert.

Durch diese Steuerung des Sollwertpulses wird dessen Vorderflanke im wesentlichen in dem gleichen Sinne beeinflußt wie die Vorderflanke des Istwertpulses durch den systematischen Fehler. Im Idealfall würde dies bedeuten, daß sich die Wirkung des systematischen Fehlers auf die Bildung der Phasendifferenz zwischen den Vorderflanken des Istpulses und des Sollpulses nicht mehr auswirkt, so daß trotz des Tachofehlers eine ungestörte Gleichlaufregelung während jeder Umdrehung möglich ist. Es könnten sich nämlich in diesem Falle nur noch die tatsächlich auf Geschwindigkeitsänderungen des Motors zurückzuführenden Phasenschwankungen des Istwertpulses auf die Regelabweichungsgröße auswirken.

Da jedoch, wie ausgeführt, die gespeicherten Differenzwerte der Phasen außer dem systematischen Fehler noch einen unsystematischen Fehler haben, werden die gespeicherten Differenzwerte im Laufe der folgenden Umdrehungen in dem Korrekturspeicher weiter inkremental korrigiert. Dabei tritt eine Mittelwertbildung über mehrere Umdrehungen für jeden einzelnen Tachoimpuls bzw. Impuls des Istwertpulses ein.

In Fig. 2 ist dies in den Kurvenzügen e, f, g dargestellt. Es ist dazu angenommen, daß die Impulse des Istwertpulses in dem Kurvenzug e keine unsystematischen Fehler, jedoch natürlich die gleichen systematischen Fehler wie die Impulse des Istwertpulses der ersten Umdrehung aufweisen. Aus den gebildeten Mittelwerten entstehen die einzelnen Differenzen der Phasen $\Delta\varphi_{21}$, $\Delta\varphi_{22}$, $\Delta\varphi_{23}$ - Kurvenzug f. Um diese Differenzen werden die in dem Korrekturspeicher gespeicherten Phasendifferenzen $\Delta\varphi_{11}$, $\Delta\varphi_{12}$, $\Delta\varphi_{13}$ inkremental vermindert, siehe Kurvenzug g. In dem vorliegenden Beispiel entsprechen die Phasendifferenzen nach der zweiten Umdrehung (Kurvenzug g) zufällig bereits den systematischen Fehlern.

In jedem Fall wird auch bei anderen Verhältnissen zwischen systematischem und unsystematischem Fehler, so lange letzterer nicht überwiegt, eine iterative Annäherung des Speicherinhalts des Korrekturspeichers an den systematischen Fehler und damit eine Fehlerkompensation über den variablen Frequenzteiler erreicht. Wenn der unsystematische Fehler weitgehend in seinen Auswirkungen auf den Korrekturspeicher eliminiert ist, beispielsweise wenn der Inhalt des Korrekturspeichers für die einzelnen Phasenwerte nur um $\pm$ 1 Bit schwankt, kann dies durch nicht dargestellte Mittel mit einem Korrekturabbruchkriterium erfaßt werden. Diese steuern den Korrekturspeicher so, daß dessen Speicherinhalt für die folgenden Umdrehungen unverändert erhalten bleibt, bis die Maschine erneut eingeschaltet wird.

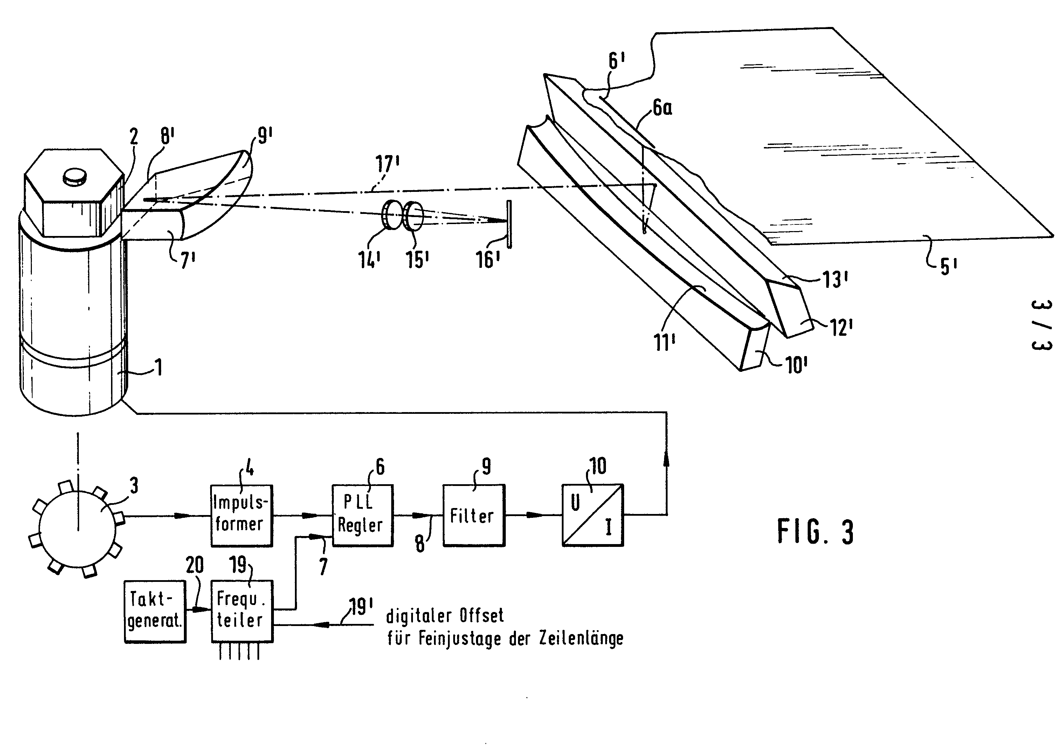

In Fig. 3 gehört zu einem Flachbett-Ablenksystem als optisches System ein Polygonspiegel 2 mit sechs um jeweils 120° gegenseitig versetzten drehbaren spiegelnden Flächen. Das Polygon wird durch den Motor 1 angetrieben.

In dem Strahlengang zwischen dem Polygonspiegel 2 und einer planen Ablenkebene 5', die in einem typographischen Setzgerät durch eine lichtempfindliche Filmebene dargestellt sein kann, ist die Optik zum Projizieren eines auf die drehbare spiegelnde Fläche einfallenden Strahlenbündels in die Ablenkebene 5' sowie zum Linearisieren der Beziehung zwischen einem Ablenkwinkel entsprechend dem Drehwinkel des Polygons und der Position des in eine Ablenkzeile 6' projizierten Strahlenbündels angeordnet:

Diese umfaßt in der Nähe des Polygons eine aplanatische Einzellinse 7' mit einer dem Polygon zugewandten, annähernd planen Fläche 8' und einer zweiten, der Ablenkebene zugewandten spärisch-konvexen Fläche 9'.

Hieran schließt sich im weiteren Verlaufe des Strahlengangs zwischen dem Polygon und der Ablenkebene ein feldebnender Spiegel 10' mit einer sphärischen reflektierenden Fläche 11' an. Die sphärische reflektierende Fläche ist einerseits auf die Ablenkebene und zugleich auf einen zwischengeschalteten Umlenkzeilenspiegel 12' mit einer ebenen reflektierenden Fläche 13' gerichtet, die wiederum auf die sphärisch-konvexe Fläche der aplanatischen Einzellinse weist.

In dem beschriebenen Ablenksystem sind außerhalb dieses Systems im Strahlengang noch eine Objektivlinse 14' und eine Zerstreuungslinse 15' vorgeschaltet, die unter anderem zu der noch zu beschreibenden Vorkorrektur der sphärischen Aberration des Ablenksystems dienen.

Ausgehend von einer Zwischenbildebene 16', in die ein Bildpunkt eines typographischen Schriftzeichens mit üblichen optischen Mitteln, insbesondere mit einer Dekollimatorlinse (nicht dargestellt) projiziert sein kann, verläuft das Strahlenbündel durch die Zerstreuungslinse 15' und die Objektivlinse 14', die sphärisch-konvexe Fläche 9' der aplanatischen Einzellinse und tritt aus deren annähernd planer Fläche als Bündel kollimierten Lichts aus. So trifft das Bündel auf die drehbare spiegelnde Fläche des Polygonspiegels 2 und wird entsprechend der augenblicklichen Drehstellung des Polygons in die aplanatische Einzellinse 7' zurückgespiegelt, um letztlich an einer kontrollierten Position 6a innerhalb der Ablenkzeile 6' projiziert zu werden. Dabei reduziert die annähernd plane Fläche 8' den zur Auslenkung der Position 6a in der Ablenkzeile gegenüber einem Bezugspunkt benötigten Ablenkwinkel des Polygons. Diese Reduktion erfolgt im wesentlichen durch Brechung an der annähernd planen Fläche 8'. Das durch die aplanatische Einzellinse verlaufende Strahlenbündel wird dann beim Austritt an deren sphärisch-konvexer Fläche 9' im wesentlichen in die Position 6a in der Ablenkzeile fokussiert, d.h. die übrigen optischen Elemente des Ablenksystems tragen nur korrigierend zur Fokussierung bei.

Das von der sphärisch-konvexen Fläche 9' in Richtung auf die Ablenkebene ausgehende Strahlenbündel wird über die ebene reflektierende Fläche 13' des Umlenkzeilenspiegels 12' in die sphärisch reflektierende Fläche 11' des feldebnenden Spiegels 10' reflektiert und von dieser vollständig fokussiert in die Position 6a in der Ablenkzeile gelenkt. Der Umlenkzeilenspiegel trennt dabei den von der aplanatischen Einzellinse einfallenden Strahl von dem von dem feldebnenden Spiegel reflektierten Strahl.

Das beschriebene optische System kann in wenig aufwendiger Weise ausschließlich auf optimale Bildqualität eingestellt werden. Hingegen wird die Länge der Abtastlinien in der Ablenkebene 5' einjustiert durch zusätzliche konstante Beeinflussung des Teilerverhältnisses (Offset) in dem Gleichlaufregelkreis. Hierzu ist der Frequenzteiler 19 entsprechend organisiert und mit einem entsprechenden Eingang 19' versehen. Damit läßt sich eine besonders präzise Justierung der Abtastzeilenlänge erzielen.

Patentansprüche

1. Verfahren zur Gleichlaufregelung eines Elektromotors insbesondere zum Antrieb eines drehbaren reflektierenden Elements eines optischen Abtastsystems, durch Vergleich eines von einem Tachogenerator erzeugten Istwertpulses mit einem digitalen Sollwert und Speisung des Elektromotors mit einer von dem Vergleichsergebnis abhängigen Stellgröße, d a d u r c h   g e k e n n z e i c h n e t , daß ein Mittelwert der Phase des Istwertpulses über eine Umdrehung gebildet wird, daß die Phasen der Impulse aus dem Istwertpuls während dieser Umdrehung mit dem Mittelwert der Phase verglichen werden, daß die so gebildeten Phasendifferenzen zumindest für diese Umdrehung einzeln gespeichert werden und daß die Phasen zugeordneter Impulse eines während der folgenden Umdrehung⌣(en) generierten Sollwertpulses äquivalent zu den gespeicherten Phasenwinkeln gesteuert werden, so daß systematische Phasenschwankungen des Istwertpulses um den Mittelwert bei dem anschließenden Vergleich mit dem phasengesteuerten Sollwertpuls kompensiert werden.

2. Verfahren nach Anspruch 1, d a d u r c h   g e k e n n z e i c h n e t , daß die Phasen der Impulse des Istwertpulses zu Bezugsphasen der Impulse des Sollwertpulses gemessen werden.

3. Verfahren nach Anspruch 2, d a d u r c h   g e k e n n z e i c h n e t , daß die Phasenmessungen auf Impulsvorderflanken des Istwertpulses und des Sollwertpulses bezogen werden.

0161474

4. Verfahren nach einem der Ansprüche 1 bis 3,
d a d u r c h   g e k e n n z e i c h n e t ,
daß die Phasendifferenzen für eine Reihe aufeinanderfolgender Umdrehungen nach jedem Einschalten des Motors
iterativ gebildet werden und daß die Phasendifferenzen
der Umdrehung, bei der ein vorgegebener Wert unterschritten wird, für die restliche Laufdauer des Motors gespeichert bleiben.

5. Verfahren nach einem der Ansprüche 1 bis 4,
d a d u r c h   g e k e n n z e i c h n e t ,
daß die Phasendifferenzen zwischen den Phasen der Impulse
des Istwertpulses und dem Mittelwert während jeweils einer
Umdrehung gebildet werden, nachdem der Mittelwert der
Motordrehzahl über mindestens eine Umdrehung einen vorgegebenen Wert erreicht hat.

6. Verfahren nach einem der Ansprüche 1 bis 5,
d a d u r c h   g e k e n n z e i c h n e t ,
daß der phasengesteuerte Sollwertpuls durch einen mit
einem konstanten Taktpuls gespeisten variablen Frequenzteiler erzeugt wird, dessen Teilerverhältnis durch die
für eine Umdrehung gespeicherten Phasendifferenzen steuerbar ist.

7. Einrichtung zur Gleichlaufregelung eines Elektromotors
insbesondere zum Antrieb eines drehbaren reflektierenden
Elements eines optischen Abtastsystems, mit einem einen
Istwertpuls erzeugenden Tachogenerator, mit einem digitalen Sollwertgeber, mit einem digitalen Vergleicher, der
mit dem Istwertpuls und einem digitalen Sollwert zur Bildung einer digitalen Regelabweichungsgröße beaufschlagbar
ist, sowie mit einem Umsetzer, der die Regelabweichungsgröße in eine den Motor beaufschlagende Stellgröße umsetzt,

0161474

dadurch gekennzeichnet,
daß an einem Ausgang des Vergleichers (8) ein Phasenmesser (12) zur Messung der diskreten Phasenwerte der während einer Umdrehung gebildeten digitalen Ausgangsgröße (Regelabweichungsgröße) sowie ein Mittelwertbilder (14) des Phasenmittelswerts einer Umdrehung in Verbindung stehen, daß an Ausgänge des Phasenmessers und des Mittelwertbilders ein Differenzbilder (16) angeschlossen ist, daß der Differenzbilder ausgangsseitig mit Eingängen eines Korrekturspeichers (18) für diskrete Phasendifferenzzahlen einer Umdrehung verbunden ist, daß Ausgänge des Korrekturspeichers an Teiler-Steuereingänge eines mit einem konstanten Taktpuls gespeisten variablen Frequenzteilers (19) angeschlossen sind, dessen Ausgang an einem Sollwerteingang (7) des Vergleichers (Digitalregler 6) eine Sollwertfrequenz (Sollwertpuls) einspeist.

8. Einrichtung nach Anspruch 7,
dadurch gekennzeichnet,
daß der Phasenmesser (12) einen Speicher zur Speicherung der während einer Umdrehung gemessenen diskreten Phasenwerte umfaßt.

9. Einrichtung nach Anspruch 7 oder 8,
dadurch gekennzeichnet,
daß der digitale Vergleicher Bestandteil eines Digitalreglers (6) in PLL-Technologie ist.

10. Einrichtung nach einem der Ansprüche 7 bis 9,
dadurch gekennzeichnet,
daß der Ausgang des digitalen Vergleichers bzw. Digitalreglers (6), der einen digital gebildeten Vergleichswert

0161474

zwischen Sollwertfrequenz und Istwertfrequenz in einen längenmodulierten Puls umsetzt, über ein Filter (9) und einen Spannungs/Stromumsetzer (10) mit dem Motor (1) in Verbindung steht.

11. Einrichtung nach einem der Ansprüche 7-10, d a d u r c h   g e k e n n z e i c h n e t , daß zur Justierung der Abtastzeilenlänge des optischen Abtastsystems das Teilerverhältnis des (variablen) Frequenzteilers (19) zusätzlich konstant einstellbar ist (Offset).

FIG. 1

FIG. 2

FIG. 3

digitaler Offset
für Feinjustage der Zeilenlänge

0161474

Europäisches
Patentamt

**EUROPÄISCHER RECHERCHENBERICHT**

0161474

Nummer der Anmeldung

EP 85 10 4216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | GB-A-2 006 481 (N.V. PHILIPS GLOEILAMPEN FABRIEKEN) * Seite 2, Zeile 5 - Seite 3, Zeile 12; Seite 9, Zeile 34 bis Zeile 103; Seite 7, Zeilen 11-111; Figuren 1,2,4,5 * | 1 | G 05 D 13/62 |
| A | | 2,4,5, 7,8 | |
| | --- | | |
| X | US-A-3 648 141 (HONEYWELL INC.) * Spalte 1, Zeilen 52-65; Spalte 2, Zeile 1 - Spalte 4, Zeile 22; Figur 1 * | 1 | |
| A | | 2,5,7, 8 | RECHERCHIERTE SACHGEBIETE (Int. Cl.4) |
| | --- | | |
| A | US-A-3 778 693 (US PHILIPS CORP.) * Spalte 2, Zeile 53 - Spalte 3, Zeile 36; Figur 1 * | 1,7 | G 05 D 13/00 |
| | --- | | |
| A | GB-A-2 012 999 (SONY CORP.) * Seite 2, Zeilen 14-86; Figur 3 * | 1,7,9 | |
| | ----- | | |

Der vorliegende Recherchenbericht wurde für alle Patentansprüche erstellt.

| Recherchenort DEN HAAG | Abschlußdatum der Recherche 26-06-1985 | Prüfer WEIHS J.A. |
|---|---|---|